# EUROPEAN PATENT SPECIFICATION

(11) **EP 3 215 466 B1**
(45) Date of publication and mention of the grant of the patent: **29.04.2020**
(21) Application number: 15857260.2
(22) Date of filing: 03.11.2015
(51) Int. Cl.: C02F 1/32, B01J 19/12

(54) **DEVICE FOR HYGENISATION OF FLUIDS AND SEMI-FLUIDS**
VORRICHTUNG ZUR HYGIENISIERUNG VON FLÜSSIGKEITEN UND HALB-FLÜSSIGKEITEN
DISPOSITIF D'HYGIÉNISATION DE FLUIDES ET SEMI-FLUIDES

(30) Priority: 04.11.2014 SE 1451314
(43) Date of publication of application: 13.09.2017
(73) Proprietor: Eco Clean I Skåne AB, 224 71 Lund (SE)
(72) Inventor: LUNDBERG, Leif, S-241 61 Löberöd (SE)
(74) Representative: AWA Sweden AB
(86) International application number: PCT/SE2015/051160
(87) International publication number: WO 2016/072918

(56) References cited:
- WO-A2-97/48421
- WO-A2-2005/102401
- US-A- 5 997 812
- US-A1- 2004 004 044
- US-A1- 2004 004 044
- US-A1- 2007 125 960
- US-A1- 2010 126 943

## Description

### Field of the invention

The present invention relates to a hygenisation device for hygenisation of fluids allowing users to sanitize also non transparent fluids, such as cutting fluids, by providing a user friendly, more efficient and competitive invention.

### Technical Background

The use of UV to decrease the amount of microorganisms and micropollutants has long been known. Within various technical fields there have been a long range of attempts to create devices for purification of fluids with the use of UV.

US 2004/004044 relates to a water purifier that utilizes ultraviolet radiation to carry out the purification of the water.

One problem is however that a fluid containing micropollutants and/or microorganisms is not necessarily a transparent fluid, as in the case of cutting fluids. A cutting fluid is a fluid used especially for cooling, lubrication, rust prevention or chip flushing in a machine metal-cutting operation or for other special effects in other metal working operations. The effect of treatments using UV is highly affected by the turbidity of a liquid as an increased turbidity decreases the effect of the UV. Opaque or even semi opaque fluids are difficult to purify. It is hard to achieve a homogeneous result. There is therefore, still a need for a device for hygenisation of opaque and semi opaque fluids that is user friendly, practical and also more efficient than the existing alternatives.

### Summary of the invention

One aim of the present invention is to provide the user with a product that the end user find easy to use, is more efficient than the existing alternatives and can reduce the amount of micropollutants also in non transparent and opaque fluids leaving the end user with a satisfactory hygienisation result.

The purpose above is achieved by a device for hygenisation of opaque fluids according to claim 1.

Said hygenisation device according to the present invention enables users to reduce the amount of micropollutants in fluids. Furthermore, the present invention provides a more efficient and user friendly option of hygenisation. There are several advantages with the present invention and among those, providing the end user with a product, allowing for a decreased cost of energy compared to known technologies and a product that provides the user with an option of hygenisation of semi opaque and opaque fluids and semi fluids which existing alternatives does not.

### Short description of the drawings

Fig 1 shows one embodiment of the hygenisation device according to the present invention, comprising an inlet 2, an outlet 3, an outer wall 4 and an inner wall 5.
Fig 2 shows one embodiment of the hygenisation device according to the present invention, seen as a cross view along the center axis of the double wall glass tube 1 comprising an inlet 2, an outlet 3, an outer wall 4 and an inner wall 5.
Fig 3 shows one embodiment of the hygenisation device according to the present invention, seen as a cross view across the center axis of the double wall glass tube 1 comprising an inlet 2, an outer wall 4 and an inner wall 5.

### Detailed description

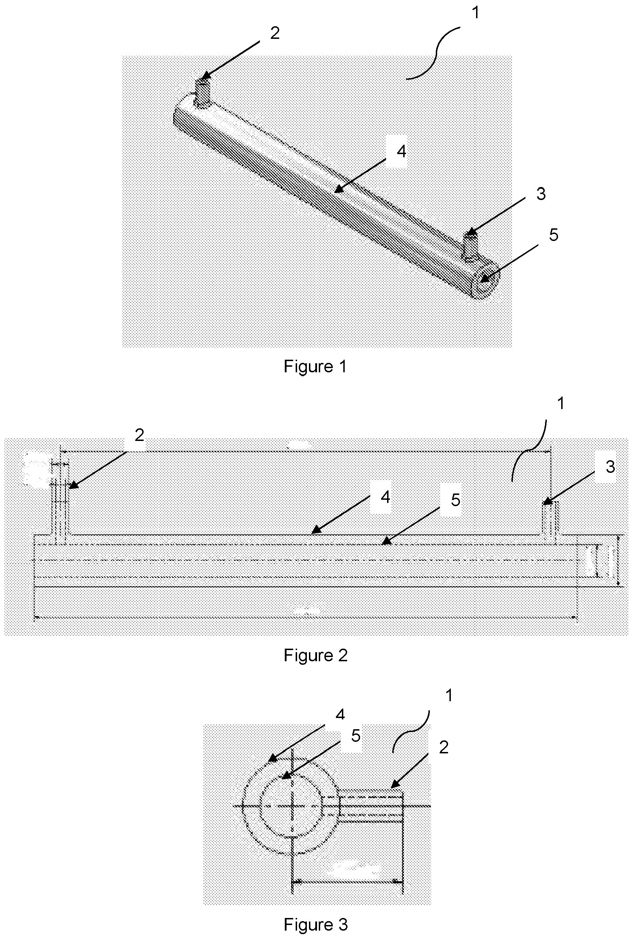

Below, specific embodiments of the present invention are described. According to one embodiment, the hygenisation device for hygenisation of opaque fluids comprise a double wall glass tube structure wherein said double wall glass tube structure comprise an outer glass tube wall and an inner glass tube wall, said inner glass tube wall arranged inside said outer glass tube wall and both walls are connected to form one double wall glass tube structure. In one embodiment the opaque fluid is a cutting fluid. Said double wall glass tube structure may in one embodiment be comprised of a spiral formed or helix shaped tubing wherein the formed outer part constitutes the outer glass tube wall and the formed inner part of the shaped tubing constitutes the inner glass tube wall. The double wall glass tube structure further comprises an inlet and an outlet placed at opposite end portions of said double wall glass tube structure. Said hygenisation device is adapted for fluid to flow between the outer and inner wall of said double wall glass tube structure. Looking at a cross section along the center axis of the tube, the double wall glass tube structure comprises a first end portion where the inlet is positioned and a second end portion at which the outlet is positioned. The inlet and an outlet may be located at different places of the double wall glass tube within each end portion. Both a position horizontally in reference to the center axis along the double wall glass tube and a position vertically in reference to the center axis along the double wall glass tube are possible embodiments. In one embodiment the inlet and the outlet are arranged vertically or each at an angle in relation to the center axis along of the double wall glass tube as may be seen in figure 1. The inlet and the outlet are not necessarily placed in parallel with each other. In yet another specific embodiment, said inlet and outlet are placed at an angle of 0-180° relative to each other, seen from a cross view section across the center axis of said double wall glass tube structure, as may be seen in figure 2. In another embodiment the inlet and the outlet are arranged in parallel with the double wall glass tube and therefore in parallel with the direction of a flow direction optionally created inside the double wall glass tube. This direction is also in parallel with the center axis along the double wall glass tube. In one embodiment of the present invention the inlet and the outlet of the double wall glass tube are placed at opposite end portions. This indicates one placement, but not exclusively, other placements are thinkable, near the end portions of the double wall glass tube. The end portions of the double wall glass tube comprises the connection points, where the outer wall of the double wall glass tube and the inner wall of the double wall glass tube are connected and, from a cross view across the center axis, a ring shaped or ring donut shaped area is created. There is one end portion at each end of the double walled glass tube, a first end portion and a second end portion. The double wall glass tube structure comprises at least one inlet and at least one outlet. Said inlet and said outlet are placed at a distance from the middle of the double walled glass tube length wise, seen from a view along the double walled glass tube and near opposite end portions of the double walled glass tube. The distance from the middle at which the inlet is placed may be the same or different from the distance at which the outlet is placed.

The hygenisation device is adapted for fluid to flow between the outer and inner wall of said double wall glass tube structure. In one embodiment the dimensions of the present invention are selected for the purpose of creating a turbulent flow of the opaque or semi opaque fluid. A laminar flow may provide a less efficient hygenisation. A fluid is a substance that continually deforms, or flows, under an applied shear stress. Fluids can be defined as substances which have zero shear modulus or in simpler terms a fluid is a substance which cannot resist any shear force applied to it. In one embodiment the present invention is adapted for sanitation or hygenisation of semifluids and as an example, the present invention may be adapted for hygenisation of semifluids such as sauce and puree.

The viscosity of the fluid may differ according to the present invention. The fluid may be low viscous or high viscous. Thus, semi fluids are also to be included as possible fluids to purify according to the present invention. The double wall glass tube comprises an inner wall and an outer wall and the hygenisation device is adapted for fluid to flow between the outer and inner wall of said double wall glass tube structure. In one embodiment the distance between the inner wall and the outer wall is adapted for sufficient UV-reactivity e.g. of a water-like fluid, an oil like fluid and/or for a puree like fluid. The present invention may be seen as suitable for various forms of liquids and/or semi liquids, adjusted for various fluids such as, but not exclusively, food, chemical, residue or biofuels products. The present invention is in one embodiment suitable for a cutting fluid. Cutting fluid is a type of coolant and lubricant designed specifically for metalworking processes, such as machining and stamping. There are various kinds of cutting fluids, for example oils, oil-water emulsions, pastes and gels, Depending on context and on which type of cutting fluid is being considered, it may be referred to as cutting fluid, cutting oil, cutting liquid, cutting compound, coolant, or lubricant. There are generally three types of liquids: mineral (straight or soluble oils), semi-synthetic, and synthetic. Semi-synthetic and synthetic cutting fluids represent attempts to combine the best properties of oil with the best properties of water by suspending emulsified oil in a water base. Water is a good conductor of heat but has drawbacks as a cutting fluid. It boils easily, promotes rusting of machine parts, and does not lubricate well. Therefore, other ingredients are necessary to create an optimal cutting fluid. Mineral oils, which are petroleum-based, first saw use in cutting applications in the late 19th century. These vary from the thick, dark, sulfur-rich cutting oils used in heavy industry to light, clear oils. Semi-synthetic coolants, also called "soluble oil," are an emulsion or micro emulsion of water with mineral oil. These began to see use in the 1930s. A typical CNC machine tool usually uses emulsified coolant, which consists of a small amount of oil emulsified into a larger amount of water through the use of a detergent. Synthetic coolants originated in the late 1950s and are usually water-based.

As previously mentioned, there is a need for further improvements relating to hygenisation of non transparent, cloudy or turbid fluids and semi fluids. Turbidity is the cloudiness or haziness of a fluid caused by large numbers of individual particles that are generally invisible to the naked eye. The measurement of turbidity may be a test of water quality. Fluids, including semi fluids can contain suspended solid matter consisting of particles of many different sizes. These solid particles cause the liquid to appear turbid or opaque. Fluids that are opaque are neither transparent, meaning allowing all light to pass through, nor translucent, meaning allowing some light to pass through. When light strikes an interface between two substances, in general some light may be reflected, some absorbed, some scattered, and the rest transmitted. An opaque substance transmits no light, and therefore reflects, scatters, or absorbs all of it. Opacity depends on the frequency of the light being considered. For instance, some kinds of glass, while transparent in the visual range, are largely opaque to ultraviolet light. Quartz, with the formula SiO2, is used for quartz glass. Fused quartz or fused silica is glass consisting of silica in amorphous (non-crystalline) form. It differs from traditional glasses in containing no other ingredients, which are typically added to glass to lower the melt temperature. Fused silica, therefore, has high working and melting temperatures. The optical and thermal properties of fused quartz are superior to other types of glass due to its purity. It has better ultraviolet transmission than most other glasses, and thus is preferable for the present invention.

The present invention aims at providing a device able to reduce the amount of microorganisms and/or micropollutants in fluids with UV-radiation. In one embodiment the hygenisation device comprise at least one UV light source. The radiation source, generating UV-radiation may be an external source placed within the glass tube structure. In another embodiment said UV light source is removably arranged in said hygenisation device. In yet another embodiment of the present invention, the radiation source, generating UV-light is incorporated, i.e. not removably arranged, in the double wall glass tube structure. The radiation source and the double wall glass structure are arranged as one unit. In another more specific embodiment, the present invention comprises a light source generating UVC-light.

For the purpose of increasing the radiation, a reflection of the light emitted by the radiation source is desired to increase exposure of the UV-light. By arranging a reflective surface around the double wall glass tube this may be accomplished. In one embodiment the present invention is coated with a reflective material and in yet another embodiment the hygenisation device is coated with at least one layer of a reflective material. In one specific embodiment of the present invention the double wall glass tube is coated with Aluminum. Coating may be accomplished in various ways and in one embodiment the coating is provided to the invention by sputtering. Sputtering is a process whereby atoms are ejected from a solid target material due to bombardment of the target by energetic particles. In other words, it is a deposit on a surface by using fast ions to eject particles of it from a target. It only happens when the kinetic energy of the incoming particles is much higher than conventional thermal energies (>> 1 eV). This process is commonly utilized for thinletfilm deposition, etching and analytical techniques. For the present invention, it is used for Sputter deposition which is a physical vapor deposition (PVD) method of thin film deposition by sputtering. This involves ejecting material from a "target" that is a source onto a "substrate". This is a similar process as the process to deposit the metal (e.g. aluminum) layer during the fabrication of CDs and DVDs. In one embodiment of the hygenisation device, the double wall glass tube comprises quartz glass. In one specific embodiment, said double wall glass tube structure is coated with a layer of a reflective material, preferably on the outer wall, and in yet another specific embodiment, said reflective material is Aluminum. In another embodiment the coating is provided to the double wall glass tube structure by sputtering. In another embodiment the coating is provided to the double wall glass tube structure by Plasma Enhanced Chemical Vapor Deposition (PECVD). PECVD is a process used to deposit thin films from a gas state (vapor) to a solid state on a substrate.

The present invention aims at hygenisation of opaque fluids and/or semifluids. An opaque fluid and/or semifluid, unless deaerated, may comprise micro bubbles filled with gas, such as air. The present invention is well suited for hygenisation of such non deaerated opaque fluids, having a presence of micro bubbles in said non deaerated opaque fluid. The construction of the present invention further preferably implies creation of a turbulent flow, allowing for additional bubbles to form. The bubbles further implies an increased efficiency of the present invention due to the bubbles acting as small lenses, spreading the light in the opaque fluid further. Moreover, the bubbles may allow for a narrower path of fluid, due to the bubbles upholding some of the space between the inner wall and the outer wall of the double wall glass tube structure.

The present invention may be used for various opaque fluids and/or semi fluids. In one embodiment the opaque fluid to be treated is a contaminated or polluted synthetic polymer or a fluid containing biological material.

One aspect of the invention, relates to a method for hygenisation of a fluid comprising the steps of:
a. passing a fluid through a hygenisation device according to the present invention; and
b. exposing said fluid in said device to UV light during the passing of a double wall glass tube construction.

Another aspect of the invention, relates to a method for hygenisation of an opaque fluid comprising the steps of:
a. passing a fluid through a hygenisation device according to the present invention; and
b. exposing said fluid in said device to UV light during the passing of the double wall glass tube construction.

Another aspect of the invention, relates to use of a device according to the present invention, for hygenisation of opaque fluids using UV.

Yet another aspect of the invention, relates to a system wherein at least two devices, according to the present invention, for hygenisation of opaque fluids are connected in series or parallel.

It should be noted that the hygienic device according to the present invention of course may comprise different standard components, such as tubing, couplings, pumps and flow meters etc. Moreover, the design of the hygienic device may vary, and the present invention, as formulated in claim 1, should be seen as embodying different forms of the product. One embodiment of such a form is a system comprising at least two devices. Said devices for hygenisation of fluids are connected in series or in parallel characterized in that each hygenisation device comprise a double wall glass tube structure wherein said double wall glass tube comprise an outer glass tube wall and an inner glass tube wall, said inner glass tube wall arranged inside said outer glass tube wall and connected to form one double wall glass tube structure, further comprising an inlet and an outlet placed at opposite ends of said double wall glass tube structure, said hygenisation device is adapted for fluid to flow between the outer and inner wall of said double wall glass tube structure.

### Examples

Tests were performed and compared from a microbiological perspective (22°C for 72 hours according to method SS-EN ISO 6222). Samples of untreated metal working fluid showed a growth of 12 000 000 cfu/ml. This may be compared to a sample of the same metal working fluid that was allowed to pass the present invention once at 3L/min. This sample, showed a growth of only 930 000 cfu/ml.

Further, in another test (relating to Coliform bacteria at 37 °C according to method IDEXX, Colilert) comparing a sample of dirty creek water, comprising 10 900 cfu/100 ml with a sample of the same water that was allowed to pass the device of the present invention once at 3L/min. This later sample comprised only 27 cfu/100 ml, i.e. a decreased of 99,75% of the original amount. The amount of E.coli (IDEXX, Colilert) decreased from 230 cfu/100 ml to <10 cfu/100 ml in the same sample. The sample was allowed to pass one more time through the device of the present invention and the amount of coliform bacteria was then reduced to <10 cfu/100 ml.

## Claims

1. A device for hygenisation of opaque fluids **characterized in that** the hygenisation device comprise a double wall glass tube structure comprising quartz glass, wherein said double wall glass tube comprise an outer glass tube wall and an inner glass tube wall, said inner glass tube wall arranged inside said outer glass tube wall and both walls are connected to form one double wall glass tube structure, further comprising an inlet and an outlet placed at opposite end portions of said double wall glass tube structure, and wherein said inlet and said outlet are placed at an angle of 0° relative to each other, seen from a cross view across the center axis of said double wall glass tube structure, said hygenisation device is adapted for fluid to flow between the outer wall and inner wall of said double wall glass tube structure, and wherein said double wall glass tube structure comprises at least one radiation source, wherein said radiation source generates UV light and wherein said double wall glass tube structure is coated with a reflective material, wherein the coating is Aluminum which is a sputter deposition on the surface of the double wall glass tube structure.

2. The device according to claim 1, wherein the coating is on the outer wall.

3. The device according to anyone of the above claims, wherein the inlet and the outlet are arranged in parallel with the double wall glass tube and therefore in parallel with the direction of a flow direction, optionally created inside the double wall glass tube.

4. The device according to anyone of the above claims, wherein the inlet and the outlet of the double wall glass tube are placed at opposite end portions.

5. The device according to anyone of the above claims, wherein said radiation source generates UVC light.

6. The device according to anyone of the above claims, wherein said UV radiation source is not removably arranged in said double wall glass tube.

7. The device according to claims 1-5, wherein said UV radiation source is removably arranged in said double wall glass tube structure.

8. A method for hygenisation of an opaque fluid comprising the steps of:
a. passing a fluid through a hygenisation device according to anyone of claims 1-7; and
b. exposing said fluid in said device to UV light during the passing of the double wall glass tube construction.

9. Use of a device according to anyone of claims 1-7 for hygenisation of opaque fluids using UV.

10. The use of a device according to claim 9, wherein the opaque fluid is a cutting fluid.

11. A system wherein at least two devices according to anyone of claims 1-7 for hygenisation of opaque fluids are connected in series or parallel.

## Patentansprüche

1. Vorrichtung zur Hygenisierung opaker Flüssigkeiten, **dadurch gekennzeichnet, dass** die Hygenisierungsvorrichtung eine doppelwandige Glasrohrstruktur umfasst, die aus Quarzglas besteht, wobei das doppelwandige Glasrohr eine äußere Glasrohrwand und eine innere Glasrohrwand umfasst, die innere Glasrohrwand innerhalb der äußeren Glasrohrwand angeordnet ist und beide Wände verbunden sind, sodass eine doppelwandige Glasrohrstruktur gebildet wird, ferner umfassend einen Einlass und einen Auslass, die an entgegengesetzten Endabschnitten der doppelwandigen Glasrohrstruktur platziert sind, und wobei der Einlass und der Auslass mit einem Winkel von 0° bezüglich zueinander platziert sind, von einer Schnittansicht über die Mittelachse der doppelwandigen Glasrohrstruktur aus gesehen, wobei die Hygenisierungsvorrichtung dazu eingerichtet ist, dass eine Flüssigkeit zwischen der äußeren Wand und der inneren Wand der doppelwandigen Glasrohrstruktur fließt, und wobei die doppelwandige Glasrohrstruktur mindestens eine Strahlungsquelle umfasst, wobei die Strahlungsquelle UV-Licht erzeugt und wobei die doppelwandige Glasrohrstruktur mit einem reflektierenden Material beschichtet ist, wobei es sich bei der Beschichtung um Aluminium handelt, das eine Sputterabscheidung auf der Oberfläche der doppelwandigen Glasrohrstruktur ist.

2. Vorrichtung nach Anspruch 1, wobei sich die Beschichtung an der äußeren Wand befindet.

3. Vorrichtung nach einem der obigen Ansprüche, wobei der Einlass und der Auslass parallel mit dem doppelwandigen Glasrohr und daher parallel mit der Richtung einer Fließrichtung angeordnet sind, optional innerhalb des doppelwandigen Glasrohrs erzeugt.

4. Vorrichtung nach einem der obigen Ansprüche, wobei der Einlass und der Auslass des doppelwandigen Glasrohrs an entgegengesetzten Endabschnitten platziert sind.

5. Vorrichtung nach einem der obigen Ansprüche, wobei die Strahlungsquelle UVC-Licht erzeugt.

6. Vorrichtung nach einem der obigen Ansprüche, wobei die UV-Strahlungsquelle nicht entfernbar im doppelwandigen Glasrohr angeordnet ist.

7. Vorrichtung nach den Ansprüchen 1-5, wobei die UV-Strahlungsquelle entfernbar in der doppelwandigen Glasrohrstruktur angeordnet ist.

8. Verfahren zur Hygenisierung einer opaken Flüssigkeit, das die folgenden Schritte umfasst:
a. Durchlaufen einer Flüssigkeit durch eine Hygenisierungsvorrichtung nach einem der Ansprüche 1-7; und
b. Aussetzen der Flüssigkeit in der Vorrichtung gegenüber UV-Licht während des Durchlaufens der doppelwandigen Glasrohrkonstruktion.

9. Verwendung einer Vorrichtung nach einem der Ansprüche 1-7 zur Hygenisierung opaker Flüssigkeiten unter Verwendung von UV.

10. Verwendung einer Vorrichtung nach Anspruch 9, wobei die opake Flüssigkeit eine Schneidflüssigkeit ist.

11. System, wobei mindestens zwei Vorrichtungen nach einem der Ansprüche 1-7 zur Hygenisierung opaker Flüssigkeiten in Reihe oder parallel verbunden sind.

## Revendications

1. Dispositif pour l'hygiénisation de fluides opaques, **caractérisé en ce que** le dispositif d'hygiénisation comprend une structure de tube de verre à double paroi comprenant du verre de quartz, ledit tube de verre à double paroi comprenant une paroi de tube de verre extérieure et une paroi de tube de verre intérieure, ladite paroi de tube de verre intérieure étant agencée à l'intérieur de ladite paroi de tube de verre extérieure et les deux parois étant reliées pour former une structure de tube de verre à double paroi, comprenant en outre une entrée et une sortie placées à des parties d'extrémité opposées de ladite structure de tube de verre à double paroi, et ladite entrée et ladite sortie étant placées à un angle de 0° l'une par rapport à l'autre, selon une vue transversale à travers l'axe central de ladite structure de tube de verre à double paroi, ledit dispositif d'hygiénisation étant adapté pour que le fluide s'écoule entre la paroi extérieure et la paroi intérieure de ladite structure de tube de verre à double paroi, et ladite structure de tube de verre à double paroi comprenant au moins une source de rayonnement, ladite source de rayonnement générant de la lumière UV et ladite structure de tube de verre à double paroi étant revêtue d'un matériau réfléchissant, le revêtement étant de l'aluminium qui est un dépôt par pulvérisation cathodique sur la surface de la structure de tube de verre à double paroi.

2. Dispositif selon la revendication 1, le revêtement étant sur la paroi extérieure.

3. Dispositif selon l'une quelconque des revendications ci-dessus, l'entrée et la sortie étant agencées parallèlement au tube de verre à double paroi et donc parallèlement à la direction d'un sens d'écoulement, éventuellement créé à l'intérieur du tube de verre à double paroi.

4. Dispositif selon l'une quelconque des revendications ci-dessus, l'entrée et la sortie du tube de verre à double paroi étant placées à des parties d'extrémité opposées.

5. Dispositif selon l'une quelconque des revendications ci-dessus, ladite source de rayonnement générant de la lumière UVC.

6. Dispositif selon l'une quelconque des revendications ci-dessus, ladite source de rayonnement UV n'étant pas agencée de manière amovible dans ledit tube de verre à double paroi.

7. Dispositif selon les revendications 1 à 5, ladite source de rayonnement UV étant agencée de manière amovible dans ladite structure de tube de verre à double paroi.

8. Procédé d'hygiénisation d'un fluide opaque comprenant les étapes de :
a. passage d'un fluide à travers un dispositif d'hygiénisation selon l'une quelconque des revendications 1 à 7 ; et
b. exposition dudit fluide dans ledit dispositif à la lumière UV pendant le passage de la construction de tube de verre à double paroi.

9. Utilisation d'un dispositif selon l'une quelconque des revendications 1 à 7, pour l'hygiénisation de fluides opaques à l'aide d'UV.

10. Utilisation d'un dispositif selon la revendication 9, le fluide opaque étant un fluide de coupe.

11. Système dans lequel au moins deux dispositifs selon l'une quelconque des revendications 1 à 7, pour l'hygiénisation de fluides opaques, sont reliés en série ou en parallèle.
